# EUROPEAN PATENT APPLICATION

(11) **EP 3 805 177 A1**
(43) Date of publication of application: **14.04.2021**
(21) Application number: 19020567.4
(22) Date of filing: 10.10.2019
(51) Int. Cl.: C04B 18/02

(54) **A METHOD OF PRODUCING LIGHTWEIGHT CERAMIC SAND FROM LIGNITE FLY ASH, COMPOSITION AND USE THEREOF**

(71) Applicant: Khan, Abbas, 08064 Zwickau (DE)
(72) Inventor: Khan, Abbas, 08064 Zwickau (DE)

(57) **Abstract**

The present invention relates to a novel method for producing lightweight ceramic sand as a building material. The present particularly relates to a novel method of fabricating sintered synthetic lightweight sand particulates directly from lignite fly ash with relatively high free lime (up to 10wt%) content. The aforementioned synthetic lightweight ceramic sand can be used as a building material. The synthetic sand can also be used as foundry sand. A novel feature of the invention is to manufacture low cost lightweight sand at high throughput to provide an alternative to fast depleting natural sand, crushed natural stones as well as lightweight fine aggregates.

## Description

### TECHNICAL FIELD OF INVENTION:

The present invention relates to a novel method for producing lightweight ceramic sand as a building material. The present particularly relates to a novel method of fabricating sintered synthetic lightweight sand particulates directly from lignite fly ash with relatively high free lime (up to 10wt%) content. The aforementioned synthetic lightweight ceramic sand can be used as a building material. The synthetic sand can also be used as foundry sand. A novel feature of the invention is to manufacture low cost lightweight sand at high throughput to provide an alternative to fast depleting natural sand, crushed natural stones as well as lightweight fine aggregates.

### Background and prior art:

Lignite fly ash is a by-product obtained by burning lignite coal based fired power stations. Currently, about 15 million tonnes of lignite fly ash is produced in Europe. On average about 20% of the lignite fly ash produced is utilised, while most of the remaining 80% used for refilling opencast mines, partly after treatment with water or water from flue gas desulphurisation (FGD water).

The utilisation of lignite fly ash is influenced considerably by their quality, i.e. by the fluctuations of the chemical and mineralogical composition as well as the physical properties. However, the main reason for non-utilization is relatively high free lime content. Excessive amounts of free lime causes unsoundness or autoclave expansion (undesirable volume change) when these materials are used in concrete and mortars. The expansion occurs due to alkali-aggregate reaction. Smaller amount of free lime (up to 4 wt%) in fly ash could be advantageous which increases compressive strength and boosts initial speed of a setting concrete and mortars, provided SO₃ content is less than 5 wt%. Regarding this, hard coal fly ash (i.e., fly ash from burning anthracite, bituminous or subbituminous coal) has more favourable prerequisites than most lignite fly ashes whose composition is subject to comparatively larger fluctuations. Refer to Table 1 for differentiation between lignite ash and hard coal ash. The fluctuations of chemical parameters of lignite fly ashes is relatively large making it difficult to find a single solution. However, the fluctuations from single power stations is relatively small.

**Table 1. Differentiation of hard coal fly ash and brown coal fly ash in context to the present invention.**

| **Constituent** | **Hard coal fly ash (wt%)** | **Lignite ash (wt%)** |
|---|---|---|
| SiO₂ | 45-65 | 30-59 |
| Al₂O₃ | 10-25 | 8-20 |
| Fe₂O₃ | 3-15 | 6-17 |
| CaO | 2-8 | 9-26 |
| Free lime (free Cao) | <0.50 | 0.50-9.50 |
| SO₃ | <1 | 1-8 |

While in the endeavour to minimise the environmental impact by production of lignite fly ash as wastage, various uses of lignite fly ash have been contemplated to both aid in fly ash disposal and to obtain some viable utility and economic return from the same.

The global demand for good quality sand in construction and other industries is applying increasing pressure on the dwindling natural sand sources. Annual production and consumption of sand outstrips nature's ability to generate sand by a factor of two. Particulates like sand are a high volume consumption building material and an essential component of the construction industry. Currently, 40 billion tonnes of sand consumed worldwide of which 30 billion tonnes are used in the concrete and mortars production. The rapid urbanisation puts growing pressure for supply from natural sand deposits in mostly ecologically fragile environments. Natural sand takes millions of years to form and is fast depleting. The extreme high consumption of sand has endangered coastal lines and 30 islands disappearance in the south east Asia.

There is an urgent need we are facing tremendous scarcity of natural sand due to heavy demand in ever growing construction activities which has forced research and development to find a suitable substitute.

One of the desirable lignite fly ash is to convert it into ceramic sand as replacements for natural sand, manufactured sand, fine aggregates and lightweight fine aggregates to produce concrete, mortars, plasters, bricks, blocks and tiles.

Reference may be made to EP0615518B1 which discloses a method of processing lignite fly-ash, especially dry electro-filter ash, to provide building materials in which firstly a coarse fraction with a lower grain-size limit of over approx. 500 micrometer is mechanically separated, the remaining fraction with an upper grain-size limit of under approx. 500 micrometer as such or its finest fraction with particles with a grain-size of under approx. 100 micrometer which is mechanically separated from a fine fraction essentially containing fine quartz sand is used to make brickyard products while the fine fraction is used in production of building materials requiring quartz sand, whereby at least the major portion of the coal, coke and wood particles is mechanically removed from the fractions thus used.

Reference may be made to US4659385A which discloses that fly ash combined with a bonding agent, an air entrainer, water, and a foaming agent which forms gas as a result of a chemical reaction within the mixture; allowed to foam and harden, produces a material that is relatively strong and light, has good structural strength, and is resistant to fire, freezing, and thermal shock. Since the major component, fly ash, is a waste product, the material is also inexpensive, and can help alleviate a waste disposal problem. The composition can be handled and fabricated much like concrete, and standard concrete components can be used to modify its strength, setting time, density, color, and water resistance. It may also be formed or crushed for use as a light weight aggregate.

Reference may be made to US5622556A which discloses an improved lightweight cementitious product made up of an aqueous cementitious mixture that can incorporate fly ash, portland cement, sand, lime, and the weight saving component, which is micronized polystyrene particles having particle sizes in the range of 50 to 2000 microns, and characterized by having very low water contents, in the range of from about 0.5% to 5% v/v. The ultra-low water compositions can be extruded and can be molded under high pressure.

Reference may be made to EP2831014A1 which discloses a method for manufacturing concrete, mortar or grout, comprising the step of allowing a mixture of a suitable aggregate material, a binding agent and water to set, wherein the binding agent consists essentially of lignite fly ash having a sulphate content of 6 wt% or higher, based on the weight of the lignite fly ash.

Reference may be made to EP1558544B1 which discloses a method for treatment of fly ash for preparation of mortars and concretes. The invention is characterized in, that in a first step fly ash is intensively blended with a highly-reactive and dry cement mixture, which mixture have been obtained by mixing Portland cement with a micro-filler and possibly a water reducing agent and by grinding said mixture, in that, in a second stage the so obtained blend is inter-grinded in a vibratory milling device to achieve the fineness of the final product with a retention on a 45µm sieve which is less than 15 percent by weight.

Reference may be made to US9254490B2 which discloses a process for treating fly ash to activate the fly ash so that it may be used as a substitute for Portland cement, with the process including the use of a specialized rotary mill having variably sized and shaped media to increase the surface area of one fly ash component by grinding, avoiding milling a second fly ash component, while roughing up the surface of the second component to increase its surface area.

Reference may be made to US5521132A which discloses a ceramic material made from raw coal fly ash or raw municipal solid waste fly ash and (1) sodium tetraborate or (2) a mixture of sodium tetraborate and a calcium containing material that is triple superphosphate, lime, dolomitic lime, or mixtures thereof.

Reference may be made to US9090506B2 which discloses method of making a rapid setting lightweight homogeneous foamed fly ash based cementitious aggregate composition with improved compressive strength for products such as panels is disclosed. The method mixes fly ash, alkali metal salt of citric acid, foaming agent for entraining air, optional foam stabilizing agent, a calcium sulfate such as stucco or gypsum, and water. Compositions are also disclosed which include mixtures of fly ash, particularly Class C fly ash alone or in mixtures with Class F fly ash, alkali metal salts of citric acid, foaming agents, a calcium sulfate such as calcium sulfate dihydrate or hemihydrate and an optional portland cement.

Reference may be made to DE10115827A1 which discloses he production of a porous concrete hardened in an autoclave and consisting of lime, cement, sand, water and propellant comprises adding fly ash produced from coal-fired power stations and having a grain size of 2,000-4,000 cm²/g according to Blaine to the mixture of lime, cement, sand, water and propellant until a sulfate content of 2-5 wt% is reached. Fly ash acts as a crystallization agent and binder.

Reference may made to WO2016202484 which discloses that lightweight fine ceramic particulates, directly obtained from fly ash, their use in different technical fields and building material compositions comprising the same. Disclosed is further the use of lightweight fine ceramic particulates according to the invention as aggregate for construction purposes, especially in combination with fly ash. Lightweight fine ceramic particulates according to the invention are further used as additive in paint or coating formulations, as foundry sand, additive for wastewater treatment, substrate for horticultural purposes, for hydroponic gardening, for green roofing purposes or for applications in geotechnics. Disclosed are also building material compositions in form of mortar or concrete, comprising the lightweight fine ceramic particulates according to the invention. The lightweight fine ceramic particulates according to the invention, and especially the building material compositions derived from them, are advantageous in respect to superior quality and workability, sound insulation and sustainability from internal curing.

Reference may be made to 3099/MUM/2011 which discloses to fabricating light weight fine particulates building materials like sintered sand from industrial wastes. More, specifically it relates to a novel process of manufacturing sintered synthetic sand from fly ash. The method is related in producing light weight fine particulates like sintered sand at high throughput and relatively low cost to compete against the fast depleting natural sand. 3099/MUM/2011 being the closest prior art discloses the production of lightweight ceramic materials from fly ash.

However, none of the prior art teaches a process that can be used for lignite fly ash. All processes on simple modifications thereof, including that in 3099/MUM/2011, have been found unusable for lignite fly ash.

It is therefore an object of the present invention which discloses the manufacturing of light ceramic sand by lignite fly ash in a simple and economic manner. The only component in the present invention is waste by-products, i.e, lignite fly ash, the raw material is inexpensive and the process helps alleviate a waste disposal problem.

The lightweight sand produced in the present invention offers the best alternative to natural sand, manufactured sand and lightweight fine aggregates.

### Object of the Invention:

The main objective of the invention is to provide a novel, simple and economical method of engineered well-defined ceramic lightweight sand from lignite fly ash.

Another objective of the invention is to provide an alternative way of substituting natural sand, manufactured sand (also known as crushed stones), light fine aggregates to produce concrete, plasters, mortars, renders and roof tiles.

Yet another objective of the invention is to provide an alternative way of substituting foundry sand for moulding.

Another objective of the present invention is to manufacture the said product using lignite fly ash which is an undesirable by-product and/or wastage.

Other objective of the present invention is to manufacture ceramic lightweight sand at high throughput and at lowest manufacturing cost without the need of disposing unused lignite fly ash.

### Summary of the Invention:

Generally in one aspect, the present invention discloses a novel, simple and economic process for manufacturing lightweight ceramic sand.

In another aspect, the present invention discloses the aforementioned end product is produced from lignite fly ash.

In yet another aspect, the present invention relates to fabrication of ceramic lightweight sand at high throughput and at very low manufacturing cost to compete against the fast depleting natural sand including crushed stones and lightweight fine aggregates produced from expanded clay, expanded glass and volcanic activities.

In still another aspect, the present invention provides a novel method of manufacturing lightweight fine particulates comprising the steps of:-
1. formation of granules or fine particulates using high intensity shear-mixer;
2. moistened fine particulates with sand graded size gradation with sub-round shapes are produced;
3. moistened fine particulates are dried using fluidized bed drying process;
4. dried granules are screened to control over size (<4.0mm) fine particulates optionally; and
5. particulates of desired size gradation are shapes are sintered at high temperature at a specific temperature range (950-1,250°C).

Other aspects of the present invention are disclosed in the appended drawings and the following description.

### Detailed Description of the Invention:

The present invention may be understood more readily by reference to the following detailed description of the invention taken in connection with the accompanying drawing figures, which forms a part of this disclosure. It is to be understood that this invention is not limited to the specific devices, methods, conditions or parameters described and/or shown herein and that the terminology used herein is for the example only and is not intended to be limiting of the claimed invention. Also, as used in the specification including the appended claims, the singular forms 'a', 'an', and 'the' include the plural, and references to a particular numerical value includes at least that particular value unless the content clearly directs otherwise. Ranges may be expressed herein as from 'about' or 'approximately' another particular value. when such a range is expressed another embodiment. Also, it will be understood that unless otherwise indicated, dimensions and material characteristics stated herein are by way of example rather than limitation and are for better understanding of sample embodiment of suitable utility, and variations outside of the stated values may also be within the scope of the invention depending upon the particular application.

This invention is not in its application to the details of construction and the arrangement of components set forth. In the following description or illustrated in the following description or illustrated in the drawings. The invention is capable of other embodiments and of being practiced or of being carried out in various ways. Also, the phraseology and terminology used herein for the purpose of description and should not be regarded as limiting. The use of "including", "comprising", "having", "containing", "involving", and variations thereof as well as additional items.

In order to achieve a better understanding of the nature of the present invention a preferred embodiment of a method of fabricating ceramic lightweight sand will now be explained.

In one embodiment, the present invention discloses a novel method for the production of light weight ceramic sand particles from lignite fly ash.

In another embodiment, the aforementioned process allows up to 100 wt% usage of lignite fly ash. Granules are formed using intensive shear-mixer, and subsequently dried between 150-300°C. Followed by the drying procedure, the dried particulates may optionally subject to screening. The screening of the granules is the optional step which may be carried out to control the size of the granule i.e. to screen the over size of the granule which are more than 4.0 mm in size.

In another embodiment, the dried granules are sintered at high temperature in a well-defined temperature to reduce free lime content. This temperature is for the lignite fly ash is between 950-1,250 °C. The resultant product conforms size gradation as per harmonized DIN 13139 (sand for mortars) and DIN 12620 (fine aggregates for concrete). Simultaneously, the product also conform DIN 13055 (lightweight aggregates for concrete and mortars).

In another embodiment, the present invention involves fabricating ceramic lightweight sand from a mixture of industrial wastes. The said fabricating process is a novel process for manufacturing synthetic lightweight sand. Substitution of natural sand with ceramic lightweight sand produced from industrial waste i.e., lignite fly ash, supports protection of these habitats where natural sand is sourced.

In one embodiment (A), the present invention discloses a method of producing lightweight sand particles from lignite fly ash comprising is disclosed, the method involves mixing 18-28 wt units water with 100 wt units of lignite fly ash followed by granulation to obtain sand precursor granules. This is followed by drying the sand precursor granules at a temperature from about 150 °C to about 300 °C to obtain dried sand precursor granules. After drying, in an optional step the dried sand precursor granules of greater than .0 mm are screened out to obtain sized granules. Then the sized granules or the dried sand precursor granules are heated from about 950 °C to about 1,250 °C to obtain the lightweight sand particles.

In another embodiment, of the present invention the above process (A) yields light weight sand particles, wherein the size of 90% of the particles is from about 0.063 mm to about .0 mm when screening is not performed.

In yet another embodiment, of the present invention the above process (A) yields lightweight sand particles, wherein the bulk density is from 850 kg/m³ to 1,125 kg/m³.

In yet another embodiment, of the present invention the above process (A) yields lightweight sand particles, wherein free lime content is less than 3 wt%.

In another embodiment, of the present invention the above process (A) yields light weight sand particles, wherein the size of 90% of the particles is from about 0.063 mm to about 4.0 mm when screening is not performed, the bulk density is from 850 kg/m³ to 1,125 kg/m³ and the free lime content is less than 3 wt%.

In another embodiment, of the present invention the above process (A) yields light weight sand particles, wherein the bulk density is from 850 kg/m³ to 1,125 kg/m³ and the free lime content is less than 3 wt%.

In another embodiment, of the present invention the above process (A) the mixing and granulation is carried out using an intensive shear-mixer.

In a further embodiment, of the present invention the above process (A) the drying is carried out using a fluidized bed drier.

In another embodiment, of the present invention the above process (A) the sintering is carried out using a rotary kiln.

In another embodiment, of the present invention the above process (A) the mixing and granulation is carried out using an intensive shear-mixer, the drying is carried out using a fluidized bed drier and the sintering is carried out using a rotary kiln.

In one embodiment (B), the present invention discloses a method of producing lightweight sand particles from lignite fly ash comprising is disclosed, the method involves mixing 50-99 wt units of lignite fly ash and 50-1 wt units of hard coal fly ash, and then mixing 18-28 wt units water followed by granulation to obtain sand precursor granules. This is followed by drying the sand precursor granules at a temperature from about 150 °C to about 300 °C to obtain dried sand precursor granules. After drying, in an optional step the dried sand precursor granules of greater than 4.0 mm are screened out to obtain sized granules. Then the sized granules or the dried sand precursor granules are heated from about 950 °C to about 1,250 °C to obtain the lightweight sand particles.

In another embodiment, of the present invention the above process (B) yields light weight sand particles, wherein the size of 90% of the particles is from about 0.063 mm to about 4.0 mm when screening is not performed.

In yet another embodiment, of the present invention the above process (B) yields lightweight sand particles, wherein the bulk density is from 850 kg/m³ to 1,125 kg/m³.

In yet another embodiment, of the present invention the above process (B) yields lightweight sand particles, wherein free lime content is less than 3 wt%.

In another embodiment, of the present invention the above process (B) yields light weight sand particles, wherein the size of 90% of the particles is from about 0.063 mm to about 4.0 mm when screening is not performed, the bulk density is from 850 kg/m³ to 1,125 kg/m³ and the free lime content is less than 3 wt%.

In another embodiment, of the present invention the above process (B) yields light weight sand particles, wherein the bulk density is from 850 kg/m³ to 1,075 kg/m³ and the free lime content is less than 3 wt%.

In another embodiment, of the present invention the above process (B) the mixing and granulation is carried out using an intensive shear-mixer.

In a further embodiment, of the present invention the above process (B) the drying is carried out using a fluidized bed drier.

In another embodiment, of the present invention the above process (B) the sintering is carried out using a rotary kiln.

In another embodiment, of the present invention the above process (B) the mixing and granulation is carried out using an intensive shear-mixer, the drying is carried out using a fluidized bed drier and the sintering is carried out using a rotary kiln.

In one embodiment (C), the present invention discloses a method of producing lightweight sand particles from lignite fly ash comprising is disclosed, the method mixing 50-99.9 wt units of lignite fly ash and 40-0 wt units of hard coal fly ash and 10-0.1 wt units of bentonite, and then mixing 18-28 wt units water followed by granulation to obtain sand precursor granules. This is followed by drying the sand precursor granules at a temperature from about 150 °C to about 300 °C to obtain dried sand precursor granules. After drying, in an optional step the dried sand precursor granules of greater than 4.0 mm are screened out to obtain sized granules. Then the sized granules or the dried sand precursor granules are heated from about 950 °C to about 1,250 °C to obtain the lightweight sand particles.

In another embodiment, of the present invention the above process (C) yields light weight sand particles, wherein the size of 90% of the particles is from about 0.063 mm to about 4.0 mm when screening is not performed.

In yet another embodiment, of the present invention the above process (C) yields lightweight sand particles, wherein the bulk density is from 850 kg/m³ to 1,125 kg/m³.

In yet another embodiment, of the present invention the above process (C) yields lightweight sand particles, wherein free lime content is less than 3 wt%.

In another embodiment, of the present invention the above process (C) yields light weight sand particles, wherein the size of 90% of the particles is from about 0.063 mm to about 4.0 mm when screening is not performed, the bulk density is from 850 kg/m³ to 1,125 kg/m³ and the free lime content is less than 3 wt%.

In another embodiment, of the present invention the above process (C) yields light weight sand particles, wherein the bulk density is from 850 kg/m³ to 1,125 kg/m³ and the free lime content is less than 3 wt%.

In another embodiment, of the present invention the above process (C) the mixing and granulation is carried out using an intensive shear-mixer.

In a further embodiment, of the present invention the above process (C) the drying is carried out using a fluidized bed drier.

In another embodiment, of the present invention the above process (C) the sintering is carried out using a rotary kiln.

In another embodiment, of the present invention the above process (C) the mixing and granulation is carried out using an intensive shear-mixer, the drying is carried out using a fluidized bed drier and the sintering is carried out using a rotary kiln.

### Experimental:

*It should be observed that the below experimental description are mentioned to illustrate a way of working of the invention and it should not construed to limit the scope of the invention.*

Lignite fly ash samples were received from power plants. The ratio of the said combination for lignite fly ash 50-100wt%, for hard coal fly ash is 50-0wt% and for bentonite is 10-0wt%. The mixture improves green body strength. The formulations are prepared as indicated in Table 2.

**Table 2**

| **Formulation - 1** | | **Formulation -2** | | **Formulation -3** | |
|---|---|---|---|---|---|
| Chemicals | g | Chemicals | g | Chemicals | g |
| Lignite fly ash | 100 | Lignite fly ash | 50-99 | Lignite fly ash | 50-99 |
| | | Hard coal fly ash | 50-1 | Hard coal fly ash | 40-0 |
| | | | | Bentonite | 10-1 |
| **Total** | **100** | **Total** | **100** | **Total** | **100** |
| Water | 18-28 | Water | 18-28 | Water | 18-28 |

Lignite fly ash disposed into the high intensity shear-mixer. Fly ash and/or bentonite added while rotor and pan are rotating. The blending and mixing carried out for up to 60 seconds to ensure homogeneous mixing. Water is added up to 25wt% to the mixture. This addition of water is performed under rotating condition of both rotor and pan. The rotation is carried out for 3-6 minutes. During the rotation procedure plurality of granules/spheres is formed. The granules thus obtained are herein referred to as sand precursor.

The moistened sand precursors are then dried using fluidised bed dryer. The residence time of fine particulates in the dryer depends upon several factors such as dryer's length, drying temperature, drying duration and air flow. For the experiment temperature of the dryer used in the range of about 150-300°C and air feed between 750-1,500 m³/h and drying duration 4-8 minutes.

Dried sand precursors which has moisture between 1-5wt% are fired in rotary kiln. The residence time of sand precursors in the kiln depends on several factors such as kiln length, temperature of the kiln which is in the range of about 950-1,250°C, chemical composition, particulate size, throughput and temperature of sand precursors. The size of lightweight sand particles produced are typically between 0.063 mm to 4.0 mm. The bulk density of these lightweight fine particulates is between 850 kg/m³ to 1,125 kg/m³.

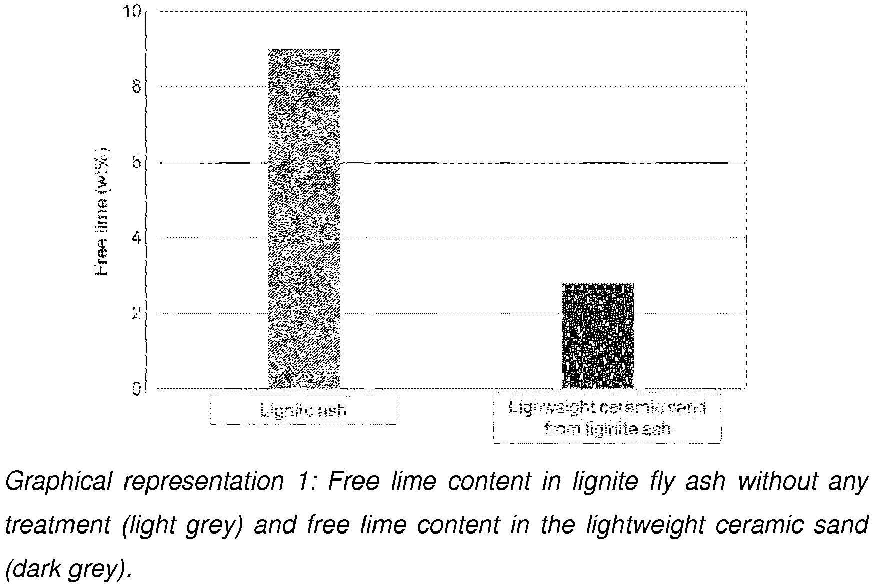

Graphical representation 2 compares results from different source of raw materials. As expected, concrete from lightweight ceramic sand from lignite ash is somewhat slightly heavier than concrete produced from lightweight ceramic sand from hard coal fly ash. However, it is up to 30% lighter than normal concrete.

### Advantages of the invention

1. The major advantage of concrete produced from lightweight ceramic sand from lignite ash is that it can almost match the compressive strength of concrete produce from normal sand despite being lighter in weight (Graphical representation 3). This will revolutionize the construction industry where architects can express more due to better strength to weight ratio. 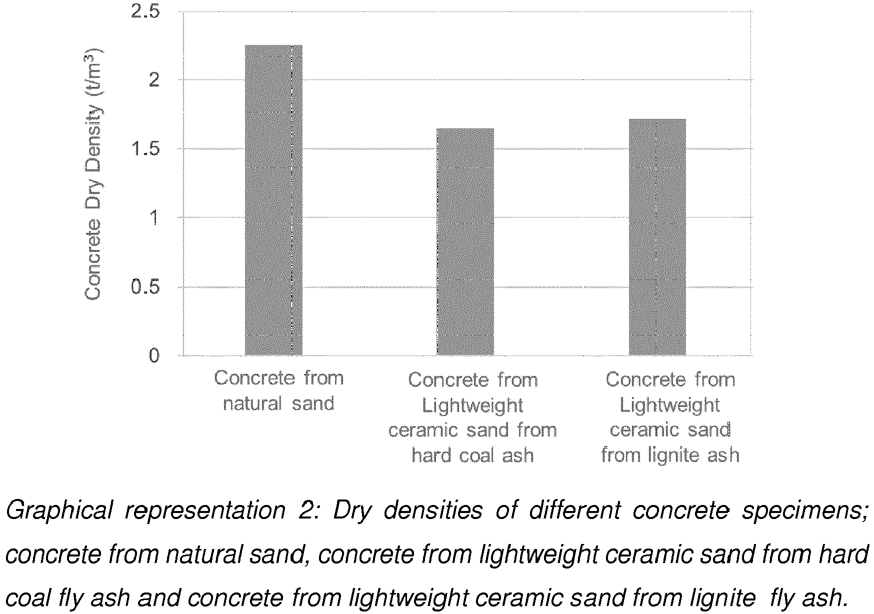
2. The process disclosed in the instant application is eco-friendly and utilises the 100% of the waste product i.e. lignite fly ash and hard coal fly ash in the production of useful industrial building material. 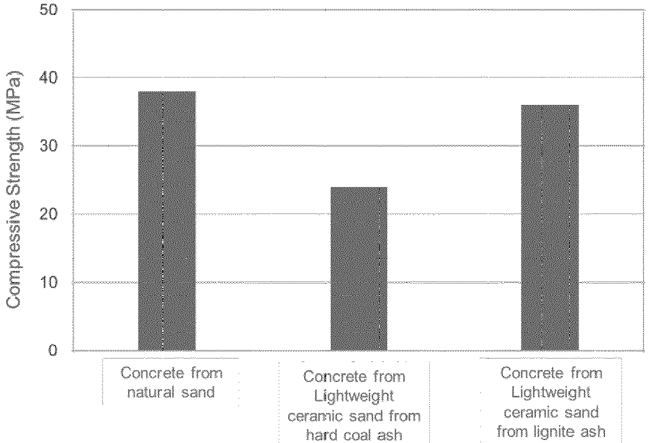 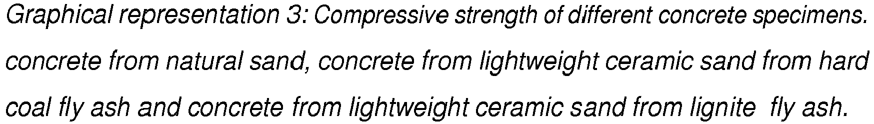
3. Another advantage of the present invention is the development of easier yet effective method of treating free lime (up to 10 wt%) in fly ash resulting in less than 3 wt% free lime in the end product.
4. Another advantage of the present invention is product high compressive strength of concrete and mortars while offering lightweight benefits at the same time.
5. Another advantage of the present invention is the derivation of the industrially useful lightweight sand product at very low production cost.

## Claims

1. A method for producing lightweight sand particles from lignite fly ash comprising:
i.mixing 18-28 wt units water with 100 wt units of lignite fly ash followed by granulation to obtain sand precursor granules;
ii.drying the sand precursor granules at a temperature from about 150 °C to about 300 °C to obtain dried sand precursor granules;
iii.optionally screening out the dried sand precursor granules of greater than 4.0 mm to obtain sized granules;
iv.heating the sized granules when screening is performed or heating the dried sand precursor granules when screening is not performed, from about 950 °C to about 1,250 °C to obtain the lightweight sand particles.

2. A method for producing lightweight sand particles from lignite fly ash comprising:
i.mixing 50-99 wt units of lignite fly ash and 50-1 wt units of hard coal fly ash, and then mixing 18-28 wt units water followed by granulation to obtain sand precursor granules;
ii.drying the sand precursor granules at a temperature from about 150 °C to about 300 °C to obtain dried sand precursor granules;
iii.optionally screening out the dried sand precursor granules of greater than 4.0 mm to obtain sized granules;
iv.heating the sized granules when screening is performed or heating the dried sand precursor granules when screening is not performed, from about 950 °C to about 1,250 °C to obtain the lightweight sand particles.

3. A method for producing lightweight sand particles from lignite fly ash comprising:
i.mixing 50-99.9 wt units of lignite fly ash and 40-0 wt units of hard coal fly ash and 10-0.1 wt units of bentonite, and then mixing 18-28 wt units water followed by granulation to obtain sand precursor granules;
ii.drying the sand precursor granules at a temperature from about 150 °C to about 300 °C to obtain dried sand precursor granules;
iii.optionally screening out the dried sand precursor granules of greater than 4.0 mm to obtain sized granules;
iv.heating the sized granules when screening is performed or heating the dried sand precursor granules when screening is not performed, from about 950 °C to about 1,250 °C to obtain the lightweight sand particles.

4. The method of claims 1, 2 or 3, wherein 90% the size of the lightweight sand particles is from about 0.063 mm to about 4.0 mm when screening is not performed.

5. The method of claims 1, 2 or 3, wherein the bulk density of the lightweight sand particles is from 825 kg/m³ to 1,125 kg/m³.

6. The method of claims 1, 2 or 3, wherein the free lime content of the lightweight sand particles is less than 3 wt%.

7. The method of claims 1, 2 or 3, wherein the mixing and granulation is carried out using an intensive shear-mixer.

8. The method of claims 1, 2 or 3, wherein the drying is carried out using a fluidized bed drier.

9. The method of claims 1, 2 or 3, wherein the sintering is carried out using a rotary kiln.

10. The method of claims 1, 2 and 3 wherein, lignite fly ash comprises of SiO₂ 32-59 wt%, Al₂O₃ 8-20 wt%, Fe₂O₃ 6-17 wt%, CaO 9-26 wt%, free lime 0.50-9.50 wt%, and SO₃ 1-8 wt%.
